Europäisches Patentamt

(19) European Patent Office

Office européen des brevets

(11) Publication number: **0 236 655**
**B1**

(12) **EUROPEAN PATENT SPECIFICATION**

(45) Date of publication of the patent specification:
**07.02.90**

(21) Application number: **86830058.3**

(22) Date of filing: **11.03.86**

(51) Int. Cl.⁴: **B29C 33/36,** B29C 35/02,
B29C 35/04

(54) Continuous processing line for products, equipped with an autoclave to vulcanise rubber components.

(43) Date of publication of application:
**16.09.87 Bulletin 87/38**

(45) Publication of the grant of the patent:
**07.02.90 Bulletin 90/6**

(84) Designated Contracting States:
**DE FR GB IT**

(56) References cited:
**DE-A- 2 022 386**
**GB-A- 981 958**
**US-A- 1 981 194**
**US-A- 2 978 094**

(73) Proprietor: **Anzani, Lanfranco, Via L. Manara 86 Fraz. S.**
**Lorenzo, I-20015 Parablago(IT)**
Proprietor: **Anzani, Onorio, Via L. Manara 86 Fraz. S.**
**Lorenzo, I-20015 Parabiago(IT)**

(72) Inventor: **Anzani, Lanfranco, Via L. Manara 86 Fraz. S.**
**Lorenzo, I-20015 Parablago(IT)**
Inventor: **Anzani, Onorio, Via L. Manara 86 Fraz. S.**
**Lorenzo, I-20015 Parabiago(IT)**

(74) Representative: **Lecce, Giovanni, Ufficio Internazionale**
**Calciati S.r.l. Via G. Negri 10, I-20123 Milano(IT)**

ACTORUM AG

## Description

This invention refers to a continuous processing line for products, and in particular for footwear, equipped with an autoclave to vulcanise rubber components, such as soles, edges, toes, essentially consisting of two continuous overlying rails, with chains to draw the trolleys used to transport the products and in particular footwear, where the upper rail is substantially of the conventional form used for all the assembly and finishing phases, whereas the lower rail in its continuity, includes an initial parking area for the incoming trolleys loaded with products, or footwear ready for the vulcanisation treatment, a second and sequential area inside the autoclave and a third successive area for unloading, suction of contaminating vapours and for forced and natural cooling. It is known that in the manufacture of many products and in particular of certain types of footwear, such as sports and Winter footwear, rubber is used to form particular components which must be highly elastic, very flexible and/or highly waterproof, in relation to the individual requirements, or uses.

As is known, in the case of footwear, these components are the soles, the toes, the edges and so forth.

In the specific case of footwear, particular phases are foreseen which are necessary to permit the appropriate application of the raw, or semi-raw, i.e. not completely vulcanised rubber components to the uppers.

One of these phases is made up of the so-called vulcanisation and essentially consists of a treatment performed at a given pressure and temperature, during which the rubber components are vulcanised and fixed intimately to the parts of the uppers with which they are in contact and form a single, inseparable body with them.

At present, to perform this fundamental treatment, footwear factories instal autoclaves that are sized so as to cyclically accommodate the continuous production of the installed processing lines.

Prescinding from the fact that the vulcanisation treatment in the autoclave is executed properly, the present day organisation of the processing cycles associated with it has several particular drawbacks and economic shortcomings, and specifically it has been noted that the present positioning of the autoclaves outside the processing lines,requires necessary and prolonged loading and unloading operations of the trolleys, their displacement from the processing lines to the autoclaves and vice-versa and the expensive use of labour and materials for the above mentioned operations. Another drawback is due to the fact that in plants with numerous processing lines it may be found that several of them have to be temporarily stopped for maintenance operations, to set-up new processes, or for other reasons associated with particular production problems, hence loading of the autoclave cannot be completed and therefore the plant can not be exploited in its optimum conditions.

GB-A 981 958 discloses an assembly line for the continuous manufacture of rubber footwear incorporating a vulcanisation step within the preparation and finishing step cycle. The disclosed assembly line comprises an assembly station, a vulcanisation station, a cooling station, a finishing station and a parking station, whrein the footwear are trasnported from one station to the other by trolleys travelling stepwise on closed rails.

The assembly line disclosed in GB-A 981 958 presents several drawbacks. The arrangement and sequence of the processing stations involve the presence of at least two operators for performing the process operations as well as the use of a movable platform to support the suspendeded collecting frame to steady it when the shoes are removed from their lasts. Furthermore, in the disclosed assembly line, the finishing operation is carried out separately and in the continuation of the conveyor appartus, so that the resulting assembly line is cumbersome.

The object of the present invention is to provide a processing line for the continuous manufacture of rubber footwear which does not present the above-reported drawbacks.

According to the present invention, this object is obtained by a processing line for the continuous manufacture of rubber footwear comprising an assembly station, a vulcanization and cooling stations, the footwear being transported from one station to the other by trolleys travelling stepwise on closed rails; in two close, continuous parallel overlying rails; the first upper rail comprising, in sequence, the assembly station and the end finishing station, and the second lower rail comprising, in sequence, the parking station and the vulcanization and cooling staions; and the footwear are moved from the upper rail to the lower rail at the end of the assembly process, and from the lower rail to the upper rail at the end of the cooling station, the above ends (the loading and unloading stations) being in the same position.

With the use of a processing line of the type described above and in particular to process fotwear,. the following results are obtained: each processing line incorporates a corresponding autoclave that receives and discharges the same transporter trolleys of the footwear, or products in general, in sequence, to the assembly and finishing operations; the autoclaves are sized to contain only a pre-determined number of trolleys and therefore of footwear, or products, corresponding to the productivity of the line in which it is incorporated; the structure of the autoclaves is essentially included in the overall dimensions of the corresponding processing lines.

The advantages achieved by this invention consist essentially in the elimination of all the intermediate loading and unloading operations of the trolleys which hat to be moved towards and returned from the autoclaves; that the said autoclaves are now sized only for the productivity of the corresponding processing line and that they only operate when their specific line is in operation.

The invention will be described in greater detail later with the help of the attached drawings which represent an example of the preferred embodiment, relative to a footwear processing line:

- figure 1 represents a side view of a processing line complete with an autoclave for vulcanisation,
- figure 2 represents a plan view of the same line, corresponding to its upper level, which moves the footwear transporting trolleys,
- figure 3 represents a second plan view of the same line, corresponding to the lower level, where the autoclave is located,
- figure 4 represents a schematic and partial plan view of the system to move the incoming trolleys, as well as when inside and leaving the autoclave, and
- figure 5 represents a continuous footwear processing line equipped with an autoclave to vulcanise soles, edges, toes and/or other rubber components on uppers, including essentially two continuous overlying rails (1) and (2) , complete with a drawing chain, on which the trolleys travel (3) and to support (4) the footwear (5).

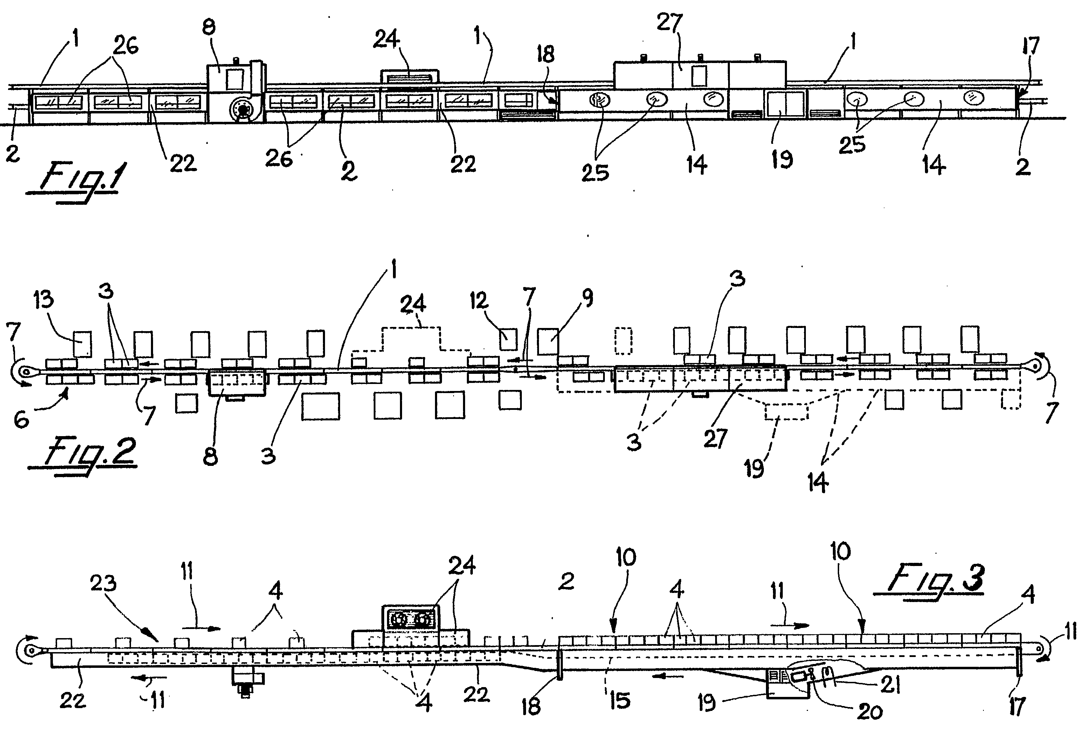

In the above mentioned processing line, the footwear assembly operations start from the station (6) and continue in the successive stations, ordered sequentially as indicated by the arrows (7).

The footwear (5) pass from one station to the other, transported by the trolleys (3), travelling on the continuous upper rail (1).

Along the route, where the assembly operations are carried out, the upper rail moves inside a first tunnel (8),where the damp uppers, transported by the trolleys (3),are dried with hot air; after successive preparation phases of the surfaces with adhesives, the trolleys (3) with the relative uppers (5) pass into a second tunnel (27)housing known heating means, the adhesives are re-activated; in the successive sequential stations the soles, edges, the toes and/or possible other rubber components are applied to the footwear so that when they reach the station (9), always transported by the trolleys (3), they are essentially ready for the vulcanised treatment.

At this point the station operator (9), after having completed the operative phase, instead of loading the footwear to be treated onto the trolley (3), which is positioned in front of his station on the upper rail (1) loads them onto the trolley (4), which is in the same position, but on the lower rail (2).

After loading, the trolley (4) is transferred to the parking area (10).

It must be noted that in the embodiment illustrated and described here, the movement of the trolleys (4) on the lower rail (2) is in the opposite direction to the movement of the trolleys (3) on the upper rail (1); hence the said trolleys (4) are transferred to the parking area (10) and the successive phases, as indicated by the arrows (11). This solution is preferred to avoid a cross-over of the trolley movement (3) and (4), on the respective rails (1) and (2), with respect to the operating phases which develop in sequence from station (9), along the route followed by the trolleys (4) travelling on the lower rail (2), to then return to the route followed by the trolleys (3) travelling on the upper rail (1) corresponding to station (12) and to the end of the cycle, defined by the head station. Although this is the preferred solution, the possibility of moving the trolleys (3) and (4) in the same direction along the two levels of continuous rails (1) and (2) may however be foreseen.

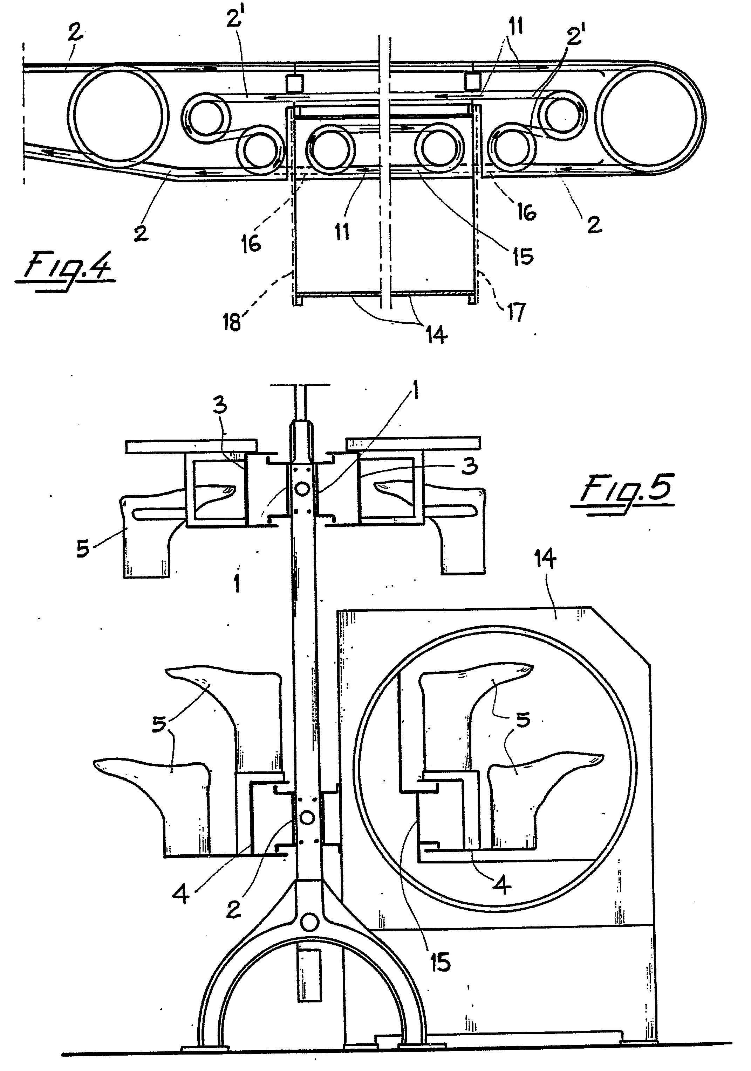

The trolleys (4) are collected and aligned in the parking area (10) until the number of trolleys corresponds to the maximum quantity that the autoclave (14) can accommodate. At this point the trolleys are transferred inside the autoclave, passing from the lower, external rail (2) to the aligned, internal rail (15) via moving points (16) that are positioned when the front door is opened (17) and the autoclave is loaded and are removed when the door is closed. As can be noted from figure 4, the lower rail (2), when it reaches the front door (17) goes around the autoclave (14), following a rear route (2'),to then realign itself with the internal rail (15) on the opposite part of the autoclave itself, at a point corresponding to the unloading door (18).

In the same way as described for the entry of the trolleys a second set of mobile points (16) are foreseen, also corresponding to the unloading door (18), to transfer the trolleys (4), aligned on the rail (15) onto the external continuation of the rail (2).

The autoclave consists essentially of an external, tubular body housing a closed rail (15), equipped with drawing means designed to arrange a row of trolleys (4) therein. A heating unit (19) preferably positioned in the central area, combines the circulation of heated, forced air, fans (20) and heaters (21). The fans are essentially directed against each other, towards the ends of the tubular body so that the air is conveyed and uniformly envelopes all the footwear (5) supported by the trolleys (4).

The number of trolleys (4) making up an autoclave (14) load and the duration of the vulcanisation treatment are proportional to the productive capacity of the processing line hence, each time the said treatment is completed, the doors (17) and (18) open, the trolleys (4) carrying the footwear just treated leave the autoclave and are conveyed into the duct (22), while an equal number of trolleys (4) parked in (10) is moved to the autoclave.

In the duct (22), the footwear that has just been vulcanised is subjected to a pre-cooling and suction treatment to remove the residual hot air and the possible contaminating vapours of rubber, after which the trolleys continue along their route on the lower rail (4), subjecting the footwear (5) to initial cooling in air, in area (23) and to a second cooling phase in the refrigerator tunnel (24) to then reach the previously mentioned working station (12) where the finishing operations begin and terminate in the head station (13).

Between the stations (12) and (13) as already specified, the footwear in the finishing phase, travel on trolleys (3) which run on the upper rail (1).

Both the autoclave (14) and the duct (22) are equipped with observation port holes (25) and (26) for internal inspections. As may be noted from that illustrated and described, the processing line includes substantially two distinct overlying transport lines along which all the operations necessary to form the footwear develop directly, or on adjacent and sequential stations, including the vulcanising treatment of the rubber items, performed sequentially, as a function of the potentiality of the line itself, with the exclusion of lost time to load and unload the footwear and as a function of an economic concept based on the reduction of plant and operating labour costs of the autoclave itself.

**Claims**

1. A processing line for the continuous manufacture of rubber footwear (5) comprising an assembly station (8, 27), a vulcanization (14) and cooling (23, 24) stations, a finishing station (13) and a parking station (10), the footwear being transported from one station to the other by trolleys (3) travelling stepwise on closed rails, characterized in that it consists in two closed, continuous parallel and overlying rails (1, 2); the first upper rail (1) comprising, in sequence, the assembly station (8, 27) and the end finishing station (13), and the second lower, rail (2) comprising, in sequence, the parking station (10) and the vulcanization (14) and cooling (23, 24) stations; and in that the footwear (5) are moved from the upper rails (1) to the lower rail (2) at the end (9) of the assembly process, and from the lower rail (2) to the upper rail (1) at the end (12) of the cooling (24) station, the above ends (9 and 12) (the loading and unloading stations) being in the same position.

2. The processing line according to claim 1, wherein the continuous sequential movement of the footwear (5) to be manufactured is from the assembly station (8, 27) of the upper rail (1), transported by the trolleys (3), to the vulcanization (14) and cooling (23, 34) stations of the lower rail (2), transported by the trolleys (4), and to the finishing station (13) of the upper rail (1).

3. The processing line according to claim 2, wherein the trolleys (3) of the upper rail (1), support two footwears and the trolleys (4) of the lower rail (4) support four footwears.

4. The processing line according to anyone of the preceding claims, wherein the vulcanization station comprises:
a tubular chamber (14),
a closed rail (15) equipped with trolley drawing means and arranged* in the tubular chamber, a heating unit (19) comprising motor-driven fans (20) and heating means (21), loading (17) and unloading (18) doors, and a set of mobile points (16) arranged at the ends of the tubular chamber; the rail (15) being aligned with the lower external rail (2), in correspondence to the doors (17) and (18), by the mobile points (16).

5. The processing line according to anyone of the preceding claims, wherein the movement of the footwear (5) along the lower rail (2) is in the opposite direction with respect to the movement along the upper rail (1).

6. The processing line according to anyone of the preceding claims, wherein the parking station (10) and the capacity of the vulcanization station (14) are proportional to the duration time of the vulcanization treatment, in order to make the process continuous.

7. The processing line according to anyone of the preceding claims, wherein the assembly station comprises a first tunnel (8) for drying with hot air the damp upper, a second tunnel (27) for the reactivation by heating of the adhesive and successive sequential stations for applying soles, edges, toes and other rubber components,

8. The processing line according to any of the preceding claims, wherein the cooling station comprises a air-cooling area (23) and a refrigerator tunnel (24).

**Patentansprüche**

1. Eine Fertigungsstraße zur kontinuierlichen Herstellung von Gummischuhwaren (5), bestehend aus einer Montagestation (8, 27), einer Vulkanisationsstation (14) und Kühlstationen (23, 24), einer Endbearbeitungsstation (13) und einer Abstellstation (10), wobei die Schuhwaren von einer Station zur anderen von Wagen (3) transportiert werden, die stufenförmig auf geschlossenen Schienen fahren, gekennzeichnet dadurch, daß sie aus zwei geschlossenen, ununterbrochen parallelen und übereinanderliegenden Schienen (1, 2) besteht; die erste obere Schiene (1) besteht nacheinander aus der Montagestation (8, 27) und der Endbearbeitungsstation (13), und die zweite untere Schiene (2) besteht nacheinander aus der Abstellstation (10) und der Vulkanisationsstation (14) sowie den Kühlungsstationen (23, 24); außerdem dadurch gekennzeichnet, daß die Schuhwaren (5) von den oberen Schienen (1) zur unteren Schiene (2) am Ende (9) des Montageverfahrens und von der unteren Schiene (2) zur oberen Schiene (1) am Ende (12) der Kühlstation (24) geführt werden, die obengenannten Enden (9 und 12) (die Lade- und Entladestationen) befinden sich in der gleichen Position.

2. Die Fertigungsstraße gemäß Patentanspruch 1, wobei die kontinuierliche stetige Bewegung der herzustellenden Schuhwaren (5) von der Montagestation (8, 27) der oberen Schiene (1), von den Wagen (3) transportiert, zu der Vulkanisations- (14) und Kühlungsstation 23, 24) der unteren Schiene (2), von den Wagen (4) transportiert, und zur Endbearbeitungsstation (13) der oberen Schiene (1) führt.

3. Die Herstellungsstraße gemäß Patentanspruch 2, wobei die Wagen (3) der oberen Schiene (1) zwei Schuhe und die Wagen (4) der unteren Schiene (4) vier Schuhe tragen.

4. Die Herstellungsstraße gemäß jedem der vorhergehenden Patentansprüche, wobei die Vulkanisationsstation aus folgendem besteht:
einer röhrenförmigen Kammer (14), einer geschlossenen Schiene (15), die mit Wagenzugmitteln versehen und in der röhrenförmigen Kammer untergebracht* ist, einer Erwärmungseinheit (19) mit Laufrädern mit Motorantrieb (20) und Erwärmungsmitteln (21), Lade- (17) und Entladetür (18), und einem Set von beweglichen Spitzen (16), die an den Enden der röhrenförmigen Kammer angebracht sind; die Schiene (15) ist mit der unteren Außenschiene (2), den Türen (17) und (18) entsprechend durch die beweglichen Spitzen (16) ausgerichtet.

5. Die Herstellungsstraße gemäß jedem der vorhergehenden Patentansprüche, wobei die Bewegung der Schuhwaren (5) längs der unteren Schiene (2) in entgegengesetzter Richtung in bezug auf die Bewegung längs der oberen Schiene (1) ist.

6. Die Herstellungsstraße gemäß jedem der vorhergehenden Patentansprüche, wobei die Abstellstation (10) und die Kapazität der Vulkanisationsstation (14) proportional zur Zeitdauer der Vulkanisationsbehandlung sind, um das Verfahren kontinuierlich zu machen.

7. Die Herstellungsstraße gemäß jedem der vorhergehenden Patentansprüche, wobei die Montagestation einen ersten Tunnel (8) zum Trocknen des feuchten Oberleders mit Heißluft und einen zweiten Tunnel (27) zur Reaktivierung durch Erhitzen der Klebe- und darauffolgenden Stationen zum Anbringen von Sohlen, Rändern, Spitzen und anderen Gummiteilen hat.

8. Die Herstellungsstraße gemäß jedem der vorhergehenden Patentansprüche, wobei die Kühlstation eine Luftkühlungszone (23) und einen Kühltunnel (24) hat.-

## Revendications

1. Une ligne de travail pour la fabrication continue de chaussures en caoutchouc (5) comprenant une station d'assemblage (8, 27), des stations de vulcanisation (14) et de refroidissement (23, 24), une station de finissage (13) et une station de stationnement (10), les chaussures étant transportées d'une station à l'autre par des chariots (3) voyageant graduellement sur des rails fermés, caractérisée par le fait que ce sont deux rails fermés, continus et superposés (1, 2); le premier rail supérieur (1) comprenant, de suite, la station d'assemblage (8, 27) et la station de finissage terminale (13), et le second rail inférieur (2) comprenant, de suite, la station de stationnement (10) et les stations de vulcanisation (14) et de refroidissement (23, 24); et que les chaussures (5) sont déplacées du rail supérieur (1) au rail inférieur (2) à la fin (9) du processus d'assemblage, et du rail inférieur (2) au rail supérieur (1) à la fin (12) de la staion de refroidissement (24), lesdites extrémités (9 et 12) (les stations de chargement et de déchargement) étant dans la même position.

2. La ligne de travail d'après la revendication 1, où le mouvement continu en succession des chaussures (5) devant être fabriquées est de la station d'assemblage (8, 27) du rail supérieur (1), transportées par les chariots (3), aux stations de vulcanisation (14) et de refroidissement (23, 24) du rail inférieur, transportées par les chariots (4), et à la station de finissage (13) du rail supérieur (1).

3. La ligne de travail d'après la revendication 2, où les chariots (3) du rail supérieur (1) supportent deux chaussures et les chariots (4) du rail inférieur (4) supportent quatre chaussures.

4. La ligne de travial d'après n'importe quelle des revendications précédentes, où la station de vulcanisation comprend:
une chambre tubulaire (14), un rail fermé (15) équipé de moyens d'entraînement du chariot et, placée dans la chambre tubulaire, une unité de chauffage (19) comprenant des rotors actionnés par moteur (20) et des moyens de chauffage (21), des portes de chargement (17) et de déchargement (18), et un ensemble de points mobiles (16) placés aux extrémités de la chambre tubulaire; le rail (15) étant alingé au rail extérieur inférieur (2), en correspondance des portes (17) et (18), par les points mobiles (16).

5. La ligne de travail d'après n'importe quelle des revendications précédentes, où le mouvement des chaussures (5) le long du rail inférieur (2) est dans la direction opposée par rapport au mouvement le long du rail supérieur (1).

6. La ligne de travail d'après n'importe quelle des revendications précédentes, où la station de stationnement (10) et la capacité de la station de vulcanisation (14) sont proportionnelles à la période de durée du traitement de vulcanisation; de sorte à ce que le processus soit continu.

7. La ligne de travail d'après n'importe quelle des revendications précédentes, où la station d'assemblage comprend un premier tunnel (8) pour le séchage à l'aide d'air chaud de l'humidité supérieure, un second tunnel (27) pour la réactivation par le chauffage de l'adhésif et des stations suivantes en succession pour l'application des semelles, des bord, des pointes et d'autres éléments en caoutchouc.

8. La ligne de travail d'après n'importe quelle des revendications précédentes, où la station de refroidissement comprend une zone de refroidissement à air (23) et un tunnel réfrigérant (24).

## Fig.1

## Fig.2

EP 0 236 655 B1

## Fig.3

Fig.4

Fig.5